# EUROPÄISCHE PATENTSCHRIFT

(11) **EP 3 099 740 B1**
(45) Veröffentlichungstag und Bekanntmachung des Hinweises auf die Patenterteilung: **26.09.2018**
(21) Anmeldenummer: 15701221.2
(22) Anmeldetag: 27.01.2015
(51) Int. Cl.: C08L 25/12, C08L 55/02

(54) **THERMOPLASTISCHE FORMMASSEN MIT OPTIMIERTEM FLIESSFÄHIGKEITS-ZÄHIGKEITS-VERHÄLTNIS**
THERMOPLASTIC MOLDING COMPOUNDS WITH OPTIMIZED FLOWABILITY-TOUGHNESS RATIO
MATIÈRES DE MOULAGE THERMOPLASTIQUES PRÉSENTANT UN RAPPORT OPTIMISÉ ENTRE FLUIDITÉ ET TÉNACITÉ

(30) Priorität: 28.01.2014 EP 14152826
(43) Veröffentlichungstag der Anmeldung: 07.12.2016
(73) Patentinhaber: INEOS Styrolution Group GmbH, 60325 Frankfurt am Main (DE)
(72) Erfinder: NIESSNER, Norbert, 67159 Friedelsheim (DE); BÖCKMANN, Philipp, 67098 Bad Dürkheim (DE); WALKER, Roland, 49076 Osnabrück (DE); REINING, Markus, 67071 Ludwigshafen (DE)
(74) Vertreter: Jacobi, Markus Alexander
(86) Internationale Anmeldenummer: PCT/EP2015/051548
(87) Internationale Veröffentlichungsnummer: WO 2015/113948

(56) Entgegenhaltungen:
- WO-A1-00/24829

## Beschreibung

Die vorliegende Erfindung betrifft thermoplastische Formmassen bzw. Zusammensetzungen mit einem verbesserten Schmelzindex, enthaltend mindestens zwei unterschiedliche Polymer-Komponenten. Die Formmassen enthalten als Komponenten ein oder mehrere Styrol-Copolymere A, mindestens einen Pfropfkautschuk B, sowie gegebenenfalls weiter Additive D.

Außerdem betrifft die vorliegende Erfindung ein verbessertes Verfahren zur Herstellung dieser thermoplastischen Formmassen, sowie die Verwendung der Formmassen zur Herstellung von Formkörpern, beispielsweise für Haushaltsartikel oder elektronische Bauteile.

Seit Jahrzehnten ist der Fachmann mit der Herstellung thermoplastischer Formmassen vertraut. Das Interesse liegt insbesondere auf der Modifikation von Styrol-Acrylnitril-Copolymeren durch das Einarbeiten von Kautschuken. Dies geschieht zum Beispiel durch Pfropfmischpolymerisation von Styrol und Acrylnitril in Gegenwart eines Kautschuks sowie durch nachträgliches Abmischen dieses Pfropfcopolymers mit einer separat hergestellten polymeren Matrix, zum Beispiel einem Styrol-Acrylnitril-Copolymer oder einem Methylstyrol-Acrylnitril-Copolymer.

Dass bei einer thermischen Copolymerisation von Styrol und Acrylnitril auch Oligomere entstehen können, wird von K. Kirchner (Makromol. Chem. 1976, 177, 2031-2042) beschrieben. Dieses Dokument findet, über Gas-Flüssigkeits-Chromatographie gekoppelt an Massenspektroskopie, im Wesentlichen die Bildung von Dimeren und fokussiert im Weitern auf Diel-Alder Addukte mit drei Wiederholeinheiten und deren Analytik. Um dieser Oligomerenbildung entgegen zu wirken, können Initiatoren wie Di-tert.-butylperoxid angewandt werden.

Der Einfluss von Oligomeren auf die Eigenschaften von Styrol-Acrylnitril-Copolymeren wurde von Schellenberg und Hamann (Angew. Makromol. Chem. 1991, 187, 123-134) untersucht. In diesem Zusammenhang wurde auch die Auswirkung verschiedener Oligomer-Mengen auf Produkteigenschaften untersucht. Die Oligomere sind durch Polymerisation von Styrol und Acrylnitril erhältlich und haben zwei oder drei Wiederholeinheiten. Diese Komponente weist bis zu 8,4 Gew.-% Restmonomerenanteil an Styrol auf, bezogen auf 100 Gew.-% Oligomer. Die Untersuchungen von Schellenberg ergaben, dass ein erhöhter Oligomeranteil im Wesentlichen zu verschlechterten Produkteigenschaften, wie zur Abnahme der Vicat-Erweichungstemperatur führt.

Der Schmelzvolumenindex (MVR) jedoch steigt bei einem Oligomeranteil von 0 bis 5 Gew.-% stetig an. In diesem Dokument von Schellenberg wird nicht näher auf den Einfluss von Oligomeren, enthaltend mehr als drei Wiederholeinheiten (der Monomere) und deren Oligomer-Gemische, auf Polymer-Zusammensetzungen eingegangen. Ebenfalls gibt es keine Anhaltspunkte wie sich ein Oligomeranteil in einem Polymerblend verhalten könnte.

In EP-A 0 869 149 wird ein Polycarbonat/Pfropfpolymer-Blend, insbesondere vom ABS-Typ, mit reduzierter Belagsbildung beschrieben. Der Blend enthält aromatische Polycarbonate, thermoplastische Homo-, Co- und Terpolymere, Propfpolymere und mindestens ein Additiv. Die reduzierte Belagsbildung und der Massenverlust steigen mit zunehmendem Oligomermenge an. Hierbei werden als Oligomere Produkte von zwei bis vier Wiederholeinheiten definiert. Vorzugsweise liegt die Oligomermenge bei 0,6 Gew.-% oder kleiner, bezogen auf die ABS-Matrix.

Aus US 4,068,064 gehen Reaktionsbedingungen für die Herstellung von Vinylcopolymeren hervor, welche die Bildung der Oligomermenge bei Masse-, Lösungs- oder Suspensionspolymerisation reduzieren. Hier wird unter anderem gelehrt, dass Oligomere in dem polymeren Material zu vermeiden sind. Ebenso beschreibt JP-A 8169999 thermoplastische Zusammensetzungen, die kautschukartige Pfropfpolymere und ein Vinyl-Copolymer enthalten, welches bevorzugt nicht mehr als 0,6 Gew.-% Oligomere enthält.

Im Dokument WO 2012/065977 werden thermoplastische Formmasse auf Basis von Styrolcopolymeren und Polyamide beschrieben, enthaltend 0,1 bis 5 Gew.-% Alkylacrylat-Oligomere mit einem Gewichtsmittel von 1.200 bis 4.000 g/mol. Die Oligomere werden gesondert zugegeben und sind nicht Bestandteil der Styrol-Acrylat-Matrix. Die aufgeführten Vergleichsbeispiele, welche keine Oligomere enthalten, weisen einen geringeren Schmelzflussindex und eine geringere Kerbschlagzähigkeit auf. WO 2000/24829 beschreibt thermoplastische Polycarbonat-Harze, die auch Styrolcopolymere enthalten können.

Während die im Stand der Technik beschriebenen thermoplastischen Zusammensetzungen den Oligomeranteil vermindern wollen, um die Produkteigenschaften zu optimieren, müssen oftmals Additive zugesetzt werden, um die Verarbeitung der Formmassen zu verbessern. Eine Aufgabe der vorliegenden Erfindung ist es, thermoplastische Formmassen auf Basis von Styrol-Copolymeren und agglomeriertem Propfkautschuk mit verbessertem Schmelzflussindex (Melt Volume-Flow Rate, MVR) und guter Kerbschlagzähigkeit (Charpy) zur verbesserten Verarbeitung der Formmassen zur Verfügung zu stellen.

Überraschenderweise kann diese Aufgabe durch die Bereitstellung einer thermoplastischen Formmasse gelöst werden, enthaltend die Komponenten A und B sowie gegebenenfalls die weiteren Komponenten C und D, deren Summe insgesamt 100 Gew.-% ergibt, wobei diese Formmasse bzw. Zusammensetzung 0,2 bis 3,0 Gew.-%, bezogen auf das Gesamtgewicht der Komponenten A bis D an Oligomeren enthält.

Gegenstand der Erfindung ist eine thermoplastische Zusammensetzung, enthaltend die Komponenten A und B sowie gegebenenfalls die weiteren Komponenten C und D, deren Summe insgesamt 100 Gew.-% ergibt, wobei die Formmasse besteht aus:
a) 60 bis 75 Gew.-% eines oder mehrerer Styrolcopolymere A,
b) 25 bis 40 Gew.-% eines oder mehrerer Pfropfcopolymere B,
c) 0 bis 15 Gew.-% eines von Komponente B verschiedenen Kautschuks C,
d) 0 bis 5 Gew.-% eines oder mehrerer Additive D,
wobei die Zusammensetzung 0,2 bis 3,0 Gew.-%, insbesondere 0,6 bis 3,0 Gew.-%, oftmals 1,1 bis 2,8 Gew.-%, bezogen auf das Gesamtgewicht der Komponenten A bis D an Oligomeren enthält, wobei die Oligomere eine Molmasse im Bereich von 100 bis 700 g/mol besitzen und im Wesentlichen aus Styrol und/oder Acrylnitril gebildet werden. Diese Oligomere entstehen in der Regel bei der Herstellung bzw. Verarbeitung der Komponenten A und/oder B. Daher sind diese Oligomere in den Mengenangaben der Styrolcopolymer A und/oder der Pfropfcopolymere B enthalten.

Gegenstand der Erfindung ist insbesondere eine thermoplastische Zusammensetzung, enthaltend die Komponenten A und B und D, deren Summe insgesamt 100 Gew.-% ergibt, wobei die Formmasse besteht aus (etwa) 65 bis 70 Gew.-% eines Styrol-Acrylnitril-Copolymeren A, (etwa) 30 bis 35 Gew.-% eines ABS-Pfropfcopolymere B und 0,1 bis 5 Gew.-% eines Additives D, wobei die Zusammensetzung (aus den Komponenten A oder B stammend) 1,1 bis 2,8 Gew.-%, bezogen auf das Gesamtgewicht der Komponenten A bis D an Oligomeren aus Styrol und/oder Acrylnitril mit einer Molmasse von 100 bis 700 g/mol enthält. Die Erfindung betrifft ferner eine thermoplastische Zusammensetzung, bei der die Oligomere eine Molmasse im Bereich von 100 bis 700 g/mol besitzen.

Die Erfindung betrifft ferner eine thermoplastische Zusammensetzung, bei der die Komponente B ein Polybutadienkautschuk ist, vorzugsweise hergestellt unter Einsatz von 1 bis 5 Gew.-%, bezogen auf Komponente B, eines agglomerierenden Zusatzstoffes.

Die Erfindung betrifft eine thermoplastische Zusammensetzung, bei der die Oligomere im Wesentlichen aus Styrol und/oder Acrylnitril gebildet werden. Diese Oligomere werden häufig aus 2, 3, 4, 5 oder 6 Monomer-Einheiten gebildet.

Die Erfindung betrifft ferner eine thermoplastische Zusammensetzung, bei der diese von 60 bis 70 Gew.-% eines oder mehrerer Styrolcopolymere A enthält, wobei dieses Styrol-Copolymer A aus zwei oder mehreren Monomeren aus den Gruppen Styrol, α-Methylstyrol einerseits und Acrylnitril und/oder Methylmethacrylat andererseits aufgebaut ist. Bei dem Styrol-Copolymer A handelt es sich oftmals um ein SAN-Copolymer. Die Erfindung betrifft ferner eine thermoplastische Zusammensetzung, bei der diese 29 bis 37 Gew.-%, eines oder mehrerer Pfropfcopolymere B enthält, wobei dieses Pfropfcopolymer B aus einer Pfropfgrundlage und mindestens einer Pfropfauflage aufgebaut ist, wobei die Pfropfauflage aus zwei oder mehreren Monomeren aus der Gruppe Butadien, Styrol, Acrylnitril, α-Methylstyrol, MMA, Butylacrylat, Ethylacrylat und Methylacrylamid aufgebaut ist.

Die Erfindung betrifft ferner eine thermoplastische Zusammensetzung, bei der diese zusätzlich 1 bis 15 Gew.-% eines von Komponente B verschiedenen Kautschuk C enthält, wobei dieser weitere Kautschuk C zwei oder mehrere Monomere aus der Gruppe Ethen, Propen, Buten und/oder Octen als Bausteine enthält.

Die Erfindung betrifft ferner eine thermoplastische Zusammensetzung, bei der das Pfropfcopolymer B aufgebaut ist aus:
(B1): 40 bis 85 Gew.-%, bezogen auf den Feststoffgehalt des Pfropfcopolymers B, einer Pfropfgrundlage B1, erhältlich durch (a) Polymerisation von:
(B11): 0 bis 21 Gew.-%, insbesondere 0 bis 10 Gew.-%, bezogen auf die Pfropfgrundlage B1, Styrol, und
(B12): 79 bis 100 Gew.-%, insbesondere 90 bis 100 Gew.-%, bezogen auf die Pfropfgrundlage B1, Butadien;
und (b) Agglomeration der erhaltenen Pfropfgrundlage B1 durch Zugabe von:
(E): 0,01 bis 5 Gew.-Teilen, bezogen auf 100 Gew.-Teile der Pfropfgrundlage B1, jeweils bezogen auf den Feststoffgehalt, eines agglomerierend wirkenden Copolymers (E) aus:

| | |
|---|---|
| (E1): | 80 bis 99,9 Gew.-% eines oder mehreren C₁- bis C₁₂-Alkylacrylaten oder C₁-bis C₁₂-Alkylmethacrylaten und |
| (E2): | 0,1 bis 20 Gew.-% eines oder mehreren Comonomeren, ausgewählt aus der Gruppe bestehend aus Acrylamid, Methylacrylamid, Ethylacrylamid und n-Butylacrylamid; und |

(B2): 15 bis 60 Gew.-% bezogen auf den Feststoffgehalt des Pfropfcopolymers B, einer Pfropfhülle (B2), erhältlich durch Umsetzung der agglomerierten Pfropfgrundlage B1 mit einer Mischung von:

| | |
|---|---|
| (B21): | 70 bis 90 Gew.-%, bezogen auf die Pfropfhülle B2, Styrol, und |
| (B22): | 10 bis 30 Gew.-%, bezogen auf die Pfropfhülle B2, Acrylnitril, |

wobei
(i) das agglomerierend wirkende Copolymer (E) eine Polydispersität U von kleiner 0,27 und einen d₅₀-Wert von 100 bis 150 nm aufweist, und
(ii) die agglomerierte Pfropfgrundlage B1 eine bimodale Teilchengrößenverteilung von einer Fraktion x) nicht agglomerierter Teilchen mit einem d₅₀-Wert im Bereich von 80 bis 120 nm und einer Fraktion y) agglomerierter Teilchen mit einem d₅₀-Wert im Bereich von 350 bis 550 nm und einer Polydispersität U von kleiner 0,27 aufweist.

Die Polydispersität U (Verhältnis von Mw zu Mn) und die Teilchengrößenverteilung können nach dem Fachmann bekannten Methoden bestimmt werden (GPC, Lichtstreuung, NMR, etc).

Die Erfindung betrifft ferner eine thermoplastische Zusammensetzung, bei der die Komponente A aus 60 bis 85 Gew.-% Styrol und 15 bis 40 Gew.-% Acrylnitril aufgebaut ist.

Die Erfindung betrifft auch ein Verfahren zur Herstellung einer thermoplastischen Zusammensetzung wie oben beschrieben durch Mischen der Komponenten A und B und gegebenenfalls der weiteren Komponenten C und/oder D.

Ein Gegenstand der vorliegenden Erfindung ist auch ein Verfahren zur Herstellung von Formmassen, wie sie oben beschrieben werden, durch Mischen der Komponenten A und B, sowie gegebenenfalls der Komponenten C und D, bei dem das Mischen in einem (oder mehreren) Extruder(n) so erfolgt, dass die Zusammensetzung nach dem Vermischen 0,2 bis 3,0 Gew.-%, insbesondere 0,6 bis 3,0 Gew.-%, oftmals 1,1 bis 2,8 Gew.-%, bezogen auf das Gesamtgewicht der Komponenten A bis D, an Oligomeren enthält. Diese Oligomere stammen in der Regel aus den Komponenten A und/oder B.

Die Erfindung betrifft ferner ein Verfahren zur Herstellung einer thermoplastischen Zusammensetzung wie oben beschrieben durch folgende Verfahrensschritte:
(i) Polymerisieren von Styrol, α-Methylstyrol und/oder Acrylnitril, wobei die dabei erhaltene Zusammensetzung 0,6 bis 3,0 Gew.-%, bezogen auf das Gesamtgewicht der Komponenten A bis D, an Oligomeren enthält,
(ii) Polymerisieren der Monomeren Styrol und Butadien in wässriger Emulsion zu einer teilchenförmigen Pfropfgrundlage B1,
(iii) Agglomeration der in einer Emulsion vorliegenden teilchenförmigen Pfropfgrundlage B1 mittels eines agglomerierend wirkenden Copolymers (E), wobei das Copolymer (E) eine Polydispersität U von kleiner 0,27 und einen d₅₀-Wert von 100 bis 150 nm aufweist, zu einer agglomerierten teilchenförmigen Pfropfgrundlage B1, und nachfolgend
(iv) Polymerisieren der Monomeren Styrol und Acrylnitril der Pfropfhülle in wässriger Emulsion in Gegenwart der agglomerierten teilchenförmigen Pfropfgrundlage B1,
(v) Mischen der Komponenten A und B und gegebenenfalls der weiteren Komponenten C und/oder D.

Die Erfindung betrifft ferner ein Verfahren zur Herstellung einer thermoplastischen Zusammensetzung, wobei die Vermischung der Komponenten in einem Extruder erfolgt und der Vorgang des Extrudierens in einem Zeitraum von 0,2 bis 30 Minuten, oftmals 0,2 bis 10 Minuten, und in einem Temperaturbereich von 230 bis 260 °C erfolgt.

Gegenstand ist auch die Verwendung einer thermoplastischen Zusammensetzung wie oben beschrieben zur Herstellung von Fasern, Folien und Formkörpern. Die Erfindung betrifft auch die Verwendung der oben beschriebenen Formmassen zur Herstellung von Haushaltsartikeln, elektronische Bauteilen, Haushaltsgeräten, Gartengeräten, medizinisch-technischen Geräten, Kfz-Bauteilen und Karosserieteilen.

Ein weiterer Gegenstand der Erfindung sind Formkörper (z. B. Haushaltsartikel, elektronische Bauteile, Haushaltsgeräte, Gartengeräte, medizinisch-technische Geräte, Kfz-Bauteilen und Karosserieteile), Fasern und Folien, hergestellt aus einer Formmasse wie oben beschrieben.

Die Komponenten der Zusammensetzung werden nachfolgend näher beschrieben.

### Komponente A

Als Komponente A enthalten die thermoplastischen Zusammensetzungen bzw. Formmassen 60 bis 75 Gew.-% (bezogen auf die Summe aller Komponenten) mindestens eines Styrol-Copolymer A. Komponente A ist dem Fachmann bekannt und kann über gängige Verfahren, wie zum Beispiel der radikalfreien anionischen oder kationischen Polymerisierung, hergestellt werden.

Vorzugsweise wird Komponente A hergestellt mittel durchgehender oder nicht durchgehender Substanzpolymerisation, Emulsionspolymerisation oder Lösungspolymerisation. Besonders bevorzugt wird die Polymerisation in 0 bis 20 Gew.-%, oftmals 0,5 bis 20 Gew.-%, aromatischen Lösemitteln, wie Toluol, Xylol oder Ethylbenzol durchgeführt. Näheres zu der Herstellung von Komponente A kann auch dem Kunststoff-Handbuch (Vieweg-Daumiller, Band V Polystyrol, Carl-Hanser-Verlag, München, 1969, Seite 124, Zeile 12 ff.) entnommen werden.

Als Styrolcopolymere können insbesondere SAN oder andere, kautschukfreie Styrol-Copolymere verstanden werden. Beispiele für die Komponente A sind gängige Copolymer-Matrices wie zum Beispiel durch Massepolymerisation, Emulsions- oder Lösungsmittel-polymerisation hergestellte Styrol-Acrylnitril-Copolymere (SAN). Auch Mischungen von Matrices sind geeignet, beispielsweise die in Ulmann's Encyclopedia of Industrial Chemistry (VCH-Verlag, 5. Ausgabe, 1992, S. 633 f.) beschrieben.

In einer weiteren Ausführungsform der Erfindung wird eine Formmasse hergestellt, die eines oder mehrere Styrol-Copolymere A enthält, wobei dieses Styrol-Copolymer A aus zwei oder drei Monomeren aus der Gruppe Styrol, Acrylnitril und/oder α-Methylstyrol aufgebaut ist. Die Copolymer-Matrix A wird vorzugsweise aus den Komponenten Acrylnitril und Styrol und/oder α-Methylstyrol durch Massepolymerisation oder in Gegenwart eines oder mehrerer Lösungsmittel hergestellt.

Bevorzugt sind Copolymere A mit Molmassen M_{w} von 15.000 bis 300.000 g/mol, wobei die Molmassen zum Beispiel durch Lichtstreuung in Tetrahydrofuran bestimmt werden können (GPC mit UV-Detektion).

Besonders bevorzugt umfasst Komponente A als α,β-ungesättigte Komponente Acrylnitril sowie Styrol und/oder α-Methylstyrol als aromatische vinylische Komponente. Die Komponente A enthält dabei eine gewisse Menge an Oligomeren, wie oben beschrieben.

Komponente A ist in der Formmasse oftmals mit 60 bis 70 Gew.-% eines oder mehrerer Styrolcopolymere A enthalten, wobei dieses Styrol-Copolymer A bevorzugt aus zwei oder mehreren Monomeren aus der Gruppe Styrol, Acrylnitril, α-Methylstyrol und Methylmetacrylat aufgebaut ist. Ganz besonders bevorzugt umfasst Komponente A der Formmasse von der Erfindung ein SAN oder ein AMSAN Copolymer oder ein Styrol-α-Methylstyrolacrylnitril Copolymer (SAMSAN), zusammengesetzt aus Acrylnitril und α-Methylsyrol und Styrol.

Die Copolymer-Matrix A kann zum Beispiel enthalten:

| | |
|---|---|
| (Aa) | Polystyrolacrylnitril, hergestellt aus, bezogen auf (Aa), 60 bis 85 Gew.-% Styrol und 15 bis 40 Gew.-% Acrylnitril, oder |
| (Ab) | Poly-α-Methylstyrolacrylnitril, hergestellt aus, bezogen auf (Ab), 60 bis 85 Gew.-% α-Methylstyrol und 15 bis 40 Gew.-% Acrylnitril, oder |
| (Ac) | eine Mischung der Copolymer-Matrix (Aa) und der Copolymer-Matrix (Ab). |

Die Copolymer-Matrix A kann auch durch Copolymerisation von Acrylnitril, Styrol und α-Methylstyrol gewonnen werden.

Das zahlengemittelte Molekulargewicht (Mₙ) der Copolymer-Matrix A kann über gängige Methoden wie zum Beispiel der Gaschromatographie oder durch Gelpermeationschromatographie erfolgen und beträgt von 15.000 bis 500.000 g/mol, vorzugsweise von 15.000 bis 300.000 g/mol (bestimmt mittels GPC mit UV-Detektion). Die Viskosität (VZ) der copolymeren Matrix A beträgt (gemessen nach DIN 53726 bei 25°C in einer 0,5 Gew.-%igen Lösung in DMF) zum Beispiel von 50 bis 120 ml/g. Durch Massepolymerisation, Emulsionspolymerisation bzw. Lösungspolymerisation in zum Beispiel Toluol oder Ethylbenzol kann die Copolymer-Matrix A hergestellt werden nach einem Verfahren, wie es beispielsweise im Kunststoff-Handbuch, Vieweg-Daumiller, Band V, (Polystyrol), Carl-Hanser-Verlag, München 1969, Seiten 122 f., Zeilen 12 ff. beschrieben wird.

### Komponente B

In einer Ausführungsform der Erfindung wird eine Zusammensetzung bzw. Formmasse hergestellt, die 25 bis 40 Gew.-%, oftmals 29 bis 37 Gew.-%, eines oder mehrerer Pfropfpolymere B enthält. Dieses Pfropfpolymer B ist vorzugsweise aus einer Pfropfgrundlage und mindestens einer Pfropfauflage aufgebaut.

Das Pfropfpolymer B ist zum Beispiel aus zwei oder mehreren Monomeren aus der Gruppe Butadien, Isopren, Styrol, Acrylnitril, α-Methylstyrol, Methylmethacrylat, Ethylacrylat und/oder Methylacrylamid aufgebaut. Zur Erläuterung des Pfropfpolymers B und seiner Herstellung wird auf die Beschreibung in Ullmann's Encyclopedia of Industrial Chemistry (5. Auflage, VCH, 1992, Seiten 633f.) verwiesen.

Als Komponente B enthalten die thermoplastischen Formmassen oftmals einen Pfropfkautschuk, wobei dieser Pfropfkautschuk vorzugsweise von 25 bis 40 Gew.-%, insbesondere von 29 bis 37 Gew.-% der gesamten Formmassen ausmacht. Dieses Pfropfpolymer B ist aus einer Pfropfgrundlage, aus zum Beispiel Polybutadien (gegebenenfalls einem Butadien als Hauptkomponente enthaltendes Copolymer), und mindestens einer Pfropfauflage aufgebaut. Die Pfropfauflage ist vorzugsweise aus zwei oder mehrere Monomeren aus der Gruppe Styrol, Acrylnitril, α-Methylstyrol, Ethylacrylat, Methylacrylamid und/oder anderen co-polymerisierbaren Monomeren aufgebaut.

Die Herstellung dieser Pfropfkautschuke B kann zum Beispiel aus DE-A 38 43 371 oder DE-22 44 519 entnommen werden. Aus EP-A 0 022 200 ist es bereits bekannt, thermoplastische Formmassen herzustellen, die eine Copolymer-Matrix aus Styrol und Acrylnitril sowie ein Pfropfcopolymerisat aus einem Kautschuklatex, Styrol und Acrylnitril enthalten. Dabei wird zunächst ein Polybutadien-Latex durch radikalische Polymerisation unter Einsatz von Kaliumperoxodisulfat als Initiator hergestellt. Dieser Kautschuklatex wird dann einer Agglomeration unterzogen, die dazu dient, die Kautschukpartikel zu vergrößern. Diese Agglomeration kann beispielsweise durch eine Umsetzung des Kautschuklatex mit einer Emulsion eines Copolymeren aus Ethylacrylat und Methacrylsäureamid erfolgen. Anschließend erfolgt die Herstellung des Pfropfkautschuks dann durch Umsetzung des agglomerierten Kautschuklatex mit Styrol und Acrylnitril unter Einsatz eines Initiators. Auf den Oligomerenanteil wird hier nicht weiter eingegangen.

In einer weiteren Ausführungsform der Erfindung wird eine Formmasse eingesetzt, die als Komponente B einen Pfropfkautschuk enthält, wobei die agglomerierte Pfropfgrundlage B1 eine bimodale Teilchengrößenverteilung von einer Fraktion x) nicht agglomerierter Teilchen mit einem d₅₀-Wert im Bereich von 80 bis 120 nm und einer Fraktion y) agglomerierter Teilchen mit einem d₅₀-Wert im Bereich von 350 bis 550 nm und einer Polydispersität U von kleiner 0,27 aufweist. Dem Fachmann ist ferner bekannt, wie diese Verteilungen bestimmt werden und dass die Größe der Kautschukpartikel einen wesentlichen Einfluss auf die physikalischen Eigenschaften der thermoplastischen Formmassen hat.

Aus produktionstechnischen Gründen kann es sich als vorteilhaft erweisen, zunächst einen Kautschuklatex mit einer kleinen Partikelgröße der Kautschukteilchen herzustellen und in einem anschließenden Schritt durch ein Verfahren der Agglomeration die Partikelgröße der Kautschukteilchen zu vergrößern. In EP-A 077 038 wird z. B. die Agglomeration eines dispergierten Kautschuks in Gegenwart einer Dispersion eines Säuregruppen enthaltenen Latex sowie in Gegenwart eines neutralen Elektrolyten beschrieben.

Aus EP-A 714 941 ist ein Verfahren zur mechanischen Agglomeration von Kautschukpartikeln bekannt, das sich jedoch im technischen Maßstab nur mit großem Aufwand realisieren lässt. Weitere Verfahren zu Herstellung teilchenförmiger Kautschuke, enthaltend mindestens eine Fraktion agglomerierter Teilchen, können EP-A 0 022 200, DE 10 2005 022 632, EP-A 1 305 345, WO 2008/020012 entnommen werden.

In einer weiteren Ausführungsform der Erfindung wird eine Formmasse eingesetzt, die als Komponente B einen Pfropfkautschuk enthält, bestehend aus einer Pfropfgrundlage (B1) und einer Pfropfauflage (B2), aufgebaut aus:
B1: 40 bis 85 Gew.-%, bezogen auf den Feststoffgehalt des Pfropfcopolymers B, einer Pfropfgrundlage (B1), erhältlich durch:
(a) Polymerisation von:

| | |
|---|---|
| (B11): | 0 bis 21 Gew.-%, insbesondere 0 bis 10 Gew.-%, bezogen auf die Pfropfgrundlage B1, mindestens eines Vinylaromats, insbesondere Styrol, und |
| (B12): | 79 bis 100 Gew.-%, insbesondere 90 bis 100 Gew.-%, bezogen auf die Pfropfgrundlage B1, mindestens eines Diens, insbesondere Butadien, |

(wobei (B11) und (B12) 100 Gew.-% ergeben),und
(b) Agglomeration der erhaltenen Pfropfgrundlage B1 durch Zugabe von:
(E): 0,01 bis 5 Gew.-Teilen, bezogen auf 100 Gew.-Teile der Pfropfgrundlage B1, jeweils bezogen auf den Feststoffgehalt, eines agglomerierend wirkenden Copolymers (E) aus:

| | |
|---|---|
| (E1): | 80 bis 99,9 Gew.-% ein oder mehreren hydrophoben C₁- bis C₁₂-Alkylacrylaten oder C₁- bis C₁₂-Alkylmethacrylaten und |
| (E2): | 0,1 bis 20 Gew.-% ein oder mehreren hydrophilen Comonomeren ausgewählt aus der Gruppe bestehend aus Acrylamid, Methylacrylamid, Ethylacrylamid und n-Butylacrylamid, |

(wobei (E1) und (E2) 100 Gew.-% ergeben), und
B2: 15 bis 60 Gew.-%, bezogen auf den Feststoffgehalt des Pfropfcopolymers B, einer Pfropfhülle erhältlich durch Umsetzung der agglomerierten Pfropfgrundlage B1 mit einer Mischung von:

| | |
|---|---|
| (B21) | 70 bis 90 Gew.-%, bezogen auf die Pfropfhülle (B2), Styrol und/oder α-Methylstyrol, insbesondere Styrol, und |
| (B22) | 10 bis 30_Gew.-%, bezogen auf die Pfropfhülle (B2), Acrylnitril und/oder Methylmethacrylat, insbesondere Acrylnitril, |

(wobei die Gesamtsumme aus Pfropfgrundlage B1 und Pfropfhülle B2 100 Gew.-% ergibt),
wobei:
(i) das agglomerierend wirkende Copolymer (C) eine Polydispersität U von kleiner 0,27 und einen d₅₀-Wert von 100 bis 150 nm aufweist, und
(ii) die agglomerierte Pfropfgrundlage B1 eine bimodale Teilchengrößenverteilung von einer Fraktion x) nicht agglomerierter Teilchen mit einem d₅₀-Wert im Bereich von 80 bis 120 nm und einer Fraktion y) agglomerierter Teilchen mit einem d₅₀-Wert im Bereich von 350 bis 550 nm und einer Polydispersität U von kleiner 0,27 aufweist.

Vorzugsweise wird ein agglomerierter Pfropfkautschuk verwendet, wobei die Pfropfgrundlage (B1) mit eine agglomerierend wirkenden Komponente (E) vorgemischt wird. Die Pfropfgrundlage (B1) kann bestehen aus einer Dien-Komponente (B11) wie beispielsweise Isopren und/oder Butadien, wobei Butadien bevorzugt wird und eine Komponente (B12), enthaltend Styrol, Acrylnitril und/oder α-Methylstyrol, wobei Styrol bevorzugt wird.
Im Allgemeinen wird für die Pfropfgrundlage B1 die Dien-Komponente (B12) in einer Menge von 79 bis 100, oftmals 90 bis 100 Gew.-%, vorzugsweise von 90 bis 98 Gew.-%, und die Vinylaromat-Komponente (B11) in einer Menge von 0 bis 21 Gew.-%, oftmals 0 bis 10 Gew.-%, vorzugsweise von 2 bis 10 Gew.-% eingesetzt.

Bevorzugt ist eine Pfropfgrundlage B1 aus Butadien und Styrol, diese wird in der vorgenannten Zusammensetzung eingesetzt. Der Styrol-Gehalt beträgt in einer Ausführungsform 7 bis 14 Gew.-%, insbesondere von 7 bis 10 Gew.-%, bezogen auf B1.

Zur Herstellung der Pfropfgrundlage (B1) werden die Komponenten (B12) und gegebenenfalls (B11) in wässriger Emulsion nach dem Fachmann bekannten Verfahren bei Temperaturen von im Allgemeinen 20 bis 100 °C, bevorzugt 50 bis 90 °C polymerisiert. Hierbei können die üblichen Hilfsstoffe, wie Emulgatoren, wie Alkalisalze von Alkyl- oder Arylsulfonsäuren, Alkylsulfate, Fettalkoholsulfonate, Salze höherer Fettsäuren mit 10 bis 30 Kohlenstoffatomen oder Harzseifen verwendet werden.

Als weitere Hilfsstoffe können Polymerisationsinitiatoren dienen, insbesondere die gebräuchlichen Persulfate wie Kaliumperoxodisulfat, geeignet sind jedoch auch Redoxsysteme. Die Mengen an Initiatoren, zum Beispiel 0,1 bis 1 Gew.-%, bezogen auf das Gesamtgewicht der zur Herstellung der Pfropfgrundlage (B1) eingesetzten Monomeren, richtet sich nach dem gewünschten Molgewicht. Im Allgemeinen wird bei einem Wasser/Monomer-Verhältnis von 2 : 1 bis 0,7 : 1 gearbeitet.

Polymerisationshilfsstoffe können die üblichen Puffersubstanzen, durch welche pH-Werte von bevorzugt 6 bis 10 eingestellt werden, wie Natriumbicarbonat und Natriumpyrophosphat, sowie im Allgemeinen 0,1 bis 3 Gew.-% eines Molekulargewichtsreglers wie Mercaptane, Terpinol oder dimeres α-Methylstyrol darstellen.

Die Pfropfgrundlage (B1) wird mit einer agglomerierend wirkenden Komponente (E), welche erfindungsgemäß eine Polydispersität U von kleiner 0,27 und einen d₅₀-Wert von 100 bis 150 nm aufweist, eingesetzt. Die Komponente (E) ist aufgebaut aus einem Copolymer (E1), bestehend aus ein- oder mehreren hydrophoben C₁- bis C₁₂-Alkylacrylaten oder C₁- bis C₁₂-Alkylmethacrylaten und (E2) bestehend aus ein oder mehreren hydrophilen Comonomeren, ausgewählt aus der Gruppe bestehend aus Acrylamid, Methylacrylamid, Ethylacrylamid und n-Butylacrylamid.

Für die Komponente E wird das Copolymer (E1) in einer Menge von 80 bis 99,9 Gew.-%, bevorzugt 90 bis 99,9 Gew.-%, und die Comonomeren-Komponente (E2) in einer Menge von 0,1 bis 20 Gew.-%, bevorzugt 0,1 bis 10 Gew.-% eingesetzt.

Vorzugsweise werden für das Monomer (E1) C₁-C₄-Alkylacrylate oder auch denen Mischungen verwendet. Besonders bevorzugt wird Ethylacrylat als Monomer (E1) und Methacrylamid als Monomer (E2) verwendet. In einer besonders bevorzugten Ausführungsform ist Copolymer (E) aufgebaut aus 92 bis 98 Gew.-% Ethylacrylat und 2 bis 8 Gew.-%, jeweils bezogen auf die Gesamtfeststoffe in (E), Methylacrylamid.

Besonders bevorzugt ist ein vorstehend beschriebenes Copolymer (E), das einen Kern aufweist, der aus mindestens einem der als Komponente (C1) genannten hydrophoben Monomere aufgebaut ist, bevorzugt aus Ethylacrylat, wobei dieser Kern mit einem Copolymer gepfropft ist, das aus den Komponenten (E1) und (E2) aufgebaut ist.

Die Herstellung des eingesetzten agglomerierend wirkenden Copolymers E ist dem Fachmann bekannt, vorzugsweise durch Emulsionspolymerisation, wobei die vorstehend für die Pfropfgrundlage B1 genannten Emulgatoren verwendet werden können.

Bevorzugter Weise werden die Natrium- und Kaliumsalze von Alkylsulfonaten mit 10 bis 18 Kohlenstoffatomen und in einer Menge von 0,5 bis 5 Gew.-%, bevorzugt 0,5 bis 2 Gew.-%, bezogen auf den Gesamtmonomergehalt des Copolymers (C) eingesetzt.

Erfindungsgemäß wird das Verfahren zur Herstellung der vorstehend beschriebenen Kern/Schalen-Copolymere (e) durch eine Emulsionspoylmerisation durchgeführt, umfassend die Schritte:
(x) Emulsionspolymerisation mindestens eines Monomeren (E1) wie vorstehend definiert in einem ersten Schritt und
(y) Zugabe eines Monomerengemisches umfassend Monomere (E1+E2) in einem weiteren Schritt, wobei in Schritt (y) das Gemisch in einer Menge von 0,45 bis 4,50 Gew.-% bezogen auf den Gesamtmonomergehalt.

Bevorzugt weist das agglomerierend wirkende Copolymer (E) ein Polydispersität U von kleiner 0,26, besonders bevorzugt von kleine 0,25 auf.

Bevorzugt weist das agglomerierend wirkende Copolymer (E) einen d₅₀-Wert von 110 bis 140 nm, besonders bevorzugt von 115 bis 140 nm auf.

Im Allgemeinen erfolgt die Agglomeration der Pfropfrundlage (B1) durch Zugabe einer Dispersion des zuvor beschriebenen Copolymers (E). Die Konzentration des Copolymers (E) in der zur Agglomeration verwendeten Dispersion soll im allgemeinen zwischen 3 bis 60 Gew.-%, vorzugsweise zwischen 5 bis 40 Gew.-%, liegen.

In der Regel wird die Temperatur der Agglomeration in einem Bereich von 20 bis 120 °C, bevorzugt von 30 bis 100 °C gehalten, wobei die Zugabe des agglomerierend wirkenden Copolymers (E) auf einmal oder portionsweise, kontinuierlich oder mit einem Zulaufprofil über einen bestimmten Zeitraum erfolgen kann. Die Agglomerierzeit, d.h. die Zeit ab Beginn der Zugabe von E bis zum Start der nachfolgenden Pfropfcopolymerisation, beträgt bevorzugt von einer Minute bis zu mehreren Stunden, beispielsweise bis 2 Stunden.

Der Agglomerisation können gegebenenfalls Elektrolyte in einer Menge von 1 bis 50 Gew.-%, bezogen auf 100 Gew.-% des Feststoffgehalts der Copolymers E, zugesetzt werden. Hierbei kommen als basische Elektrolyte organische, bevorzugt anorganische Hydroxide in Betracht. Insbesondere können Lithiumhydroxid, Natriumhydroxid oder Kaliumhydroxid eingesetzt werden, z. B. in Konzentrationsbereichen von 0,001 bis 0,1 g Elektrolyt/ml.

Die nach der Agglomeration erhaltene agglomerierte Pfropfgrundlage B1 weist eine bimodale Teilchengrößenverteilung von Fraktionen x) und y) auf. Hierbei steht x) für eine Fraktion nicht agglomerierter Teilchen, welche im Allgemeinen einen d₅₀-Wert im Bereich von 80 bis 120 nm aufweisen und y) für eine Fraktion agglomerierter Teilchen mit einem d₅₀-Wert im Bereich von 350 bis 550 nm und einer Polydispersität U von kleiner 0,28.

Zur Herstellung der Pfropfcopolymere B wird die agglomerierte Pfropfgrundlage B1 mit den Monomeren B21 und B22 der Pfropfhülle (B2) gepfropft, wobei das Pfropfpolymer im Allgemeinen aufgebaut ist aus 40 bis 85 Gew.-% einer Pfropfgrundlage (B1) und 15 bis 60 Gew.-%, jeweils bezogen auf die den Feststoffgehalt des Pfropfcopolymers B, einer Pfropfhülle, wobei die Summe aus B1 und B2 zusammen 100 Gew.-% ergeben.

Die Pfropfhülle (B2) kann z. B. erhalten werden durch Umsetzung von (B21) 70 bis 90 Gew.-% an Styrol und/oder α-Methylstyrol, insbesondere Styrol, und (B22) 10 bis 30 Gew.-% Acrylnitril, Methacrylnitril und/oder Methylmethacrylat, insbesondere Acrylnitril, in Gegenwart der agglomerierten Pfropfgrundlage (B1). Die Summe aus B21 und B22 ergibt 100 Gew.-%.

Die Pfropfhülle (B2) wird nach Durchführung der vorstehend beschriebenen Agglomeration der Pfropfgrundlage (B1) vorzugsweise durch ein Emulsionspolymerisationsverfahren erzeugt.

Die erfindungsgemäßen Pfropfcopolymere B können so weiter verwendet werden, wie sie in der Reaktionsmischung anfallen, beispielsweise als Latexemulsion oder Latexdispersion. Alternativ können sie aber auch in einem weiteren Schritt aufgearbeitet werden. Maßnahmen zur Aufarbeitung sind dem Fachmann im Prinzip bekannt. Zu den Aufarbeitungsschritten zählt zum Beispiel die Isolierung der Pfropfcopolymere B aus der Reaktionsmischung, zum Beispiel durch Sprühtrocknung, Scherung oder durch Fällen mit starken Säuren oder mittels anderer Fällungsmittel, z.B. anorganischen Verbindungen wie Magnesiumsulfat. Zu den Aufarbeitungsschritten zählt auch das Trocknen des isolierten Kautschuks. Der Feststoffgehalt der Dispersion des Pfropfkautschuks beträgt oftmals ca. 40 Gew.-%.

Die Pfropfcopolymere B können hergestellt werden durch:
(i) Polymerisieren der Monomeren B11 und B12 in wässriger Emulsion zu einer teilchenförmigen Pfropfgrundlage B1,
(ii) Agglomeration der in einer Emulsion vorliegenden teilchenförmigen Pfropfgrundlage B1 mittels eines agglomerierend wirkenden Copolymers (E), wobei das Copolymer (E) eine Polydispersität U von kleiner 0,27 und einen d₅₀-Wert von 100 bis 150 nm aufweist, zu einer agglomerierten teilchenförmigen Pfropfgrundlage B1, und nachfolgend
(iii) Polymerisieren der Monomeren B21 und B22 der Pfropfhülle in wässriger Emulsion in Gegenwart der agglomerierten teilchenförmigen Pfropfgrundlage B1,
wobei B, B11, B12, B1, E, B21 und B22 die für das erfindungsgemäße Pfropfcopolymer angegebene Bedeutung haben.

### Komponente C

In einer weiteren Ausführungsform der Erfindung enthält die Formmasse eine oder mehrere zusätzliche Komponenten C und/oder D.

Die Formmasse kann zum Beispiel zusätzlich 0 bis 15 Gew.-%, oftmals 0,1 bis 15 Gew.-%, insbesondere 1 bis 15 Gew.-% weiterer, von Komponente B unterschiedlicher Kautschuke C oder eine Mischung von Kautschuken enthalten. Dieser weitere Kautschuk C kann zum Beispiel aus zwei oder mehreren Monomeren, vorzugsweise aus der Gruppe Butadien, Isopren, Styrol, Acrylnitril, α-Methylstyrol, Methylmetacrylat, Butylacrylat und/oder Ethylhexylacrylat aufgebaut sein. Auch funktionalisierte Kautschuke zum Beispiel auf Basis von Ethen und C₃-C₈-Olefinen sind als Komponente C verwendbar.

Geeignet sind insbesondere Kautschuke mit Kern-Schale-Aufbau. Hierbei handelt es sich um in Emulsion hergestellte Pfropfkautschuke, die aus mindestens einem "harten" und einem "weichen" Bestandteil bestehen, wobei das Verhältnis von Hart- zu Weichphase häufig zwischen 20 zu 60 und 70 zu 30 Gewichtsteilen liegt. Bevorzugt werden Pfropfkautschuke, die als Kern (Pfropfgrundlage) eine Komponente mit einer Glasübertragungstemperatur Tg von weniger als -20°C, vorzugsweise weniger als -40°C aufweisen, verwendet. Der Kautschukkern kann dabei bevorzugt aus Dien (besonders bevorzugt Butadien), Acrylaten (bevorzugt n-Butylacrylat, Ethylhexylacrylat), EPDM-Kautschuk oder Siloxan bestehen. Der Anteil des Kautschukkerns beträgt zwischen 40 und 90 Gew.-%. Die Glasübergangstemperatur des Kerns, bestimmt nach dem Fachmann bekannten Methoden, beträgt bevorzugt unter 0°C.

Die Partikelgröße dieses Kautschuks soll 0,05 bis 10 µm, bevorzugt 0,1 bis 5 µm und insbesondere 0,15 bis 3 µm betragen. In der äußeren Schale können auch reaktive Gruppen vorhanden sein (Epoxy- bzw. Oxazolingruppen, Säure, Säureanhydrid, Ester).

Weiterhin seien als Kautschuk-Komponente C auch Copolymere von α-Olefinen genannt. Bei den α-Olefinen handelt es sich üblicherweise um Monomere mit 2 bis 8 C-Atomen, vorzugsweise Ethylen und Propylen.

Als Comonomere haben sich Alkylacrylate oder Alkylmethacrylate, die sich von Alkoholen mit 1 bis 8 C-Atomen, vorzugsweise von Ethanol, Butanol oder Ethylhexanol, ableiten, sowie reaktive Comonomere wie Acrylsäure, Methacrylsäure, Maleinsäure, Maleinsäureanhydrid oder Glycidyl(meth-)acrylat und weiterhin Vinylester, insbesondere Vinylacetat, als geeignet erwiesen. Mischungen verschiedener Comonomere können ebenfalls eingesetzt werden. Als besonders geeignet haben sich Copolymere des Ethylens mit Ethyl- oder Butylacrylat und Acrylsäure und/oder Maleinsäureanhydrid erwiesen. Die Copolymeren können in einem Hochdruckprozess bei einem Druck von 400 bis 4500 bar oder durch Pfropfen der Comonomeren auf das Poly-α-Olefin hergestellt werden. Der Anteil des α-Olefins an dem Copolymeren C liegt i.a. im Bereich von 55 bis 99,95 Gew.-%.

### Komponente D

Als weitere Komponente D enthalten die thermoplastischen Zusammensetzungen gegebenenfalls 0 bis 5 Gew.-%, oftmals 0,1 bis 5 Gew.-%, eines oder mehrerer, zu den Komponenten A bis C unterschiedlicher Additive (Hilfs- und Zusatzstoffe). Monofunktionelle Anhydride, teilchenförmige mineralische Füllstoffe, Verarbeitungshilfsmittel, Stabilisatoren und Oxidationsverzögerer, Mittel gegen Wärmezersetzung und Zersetzung durch ultraviolettes Licht, Gleit- und Entformungsmittel, Flammschutzmittel, Farbstoffe und Pigmente und Weichmacher sind zu nennen.

Unter monofunktionellen Anhydriden sind niedermolekulare Verbindungen zu verstehen, welche Dicarbonsäureanhydridgruppen aufweisen. Gemäß der vorliegenden Erfindung können auch zwei oder mehr dieser Verbindungen verwendet werden. Im Allgemeinen liegen die Verbindungen mit einem Molgewicht kleiner 3000 g/mol, vorzugsweise kleiner 150 g/mol vor. Dieser Verbindungen können neben den Dicarbonsäureanhydridgruppen auch weitere funktionelle Gruppen enthalten.

Geeignete monofunktionelle Anhydride sind C₄-C₁₀-Alkyl-dicarbonsäureanhydride, beispielsweise Bernsteinsäureanhydrid, Glutarsäureanhydrid oder Adipinsäureanhydrid. Ferner kommen cycloaliphatische Dicarbonsäureanhydride wie 1,2-Cyclohexadicarbonsäureanhydrid, sowie Dicarbonsäureanhydride, die ethylenisch ungesättigte oder aromatische Verbindungen sind, wie zum Beispiel Maleinsäureanhydrid, Phthalsäureanhydrid oder Trimellitsäureanhydrid in Betracht. Bevorzugt eignet sich Phthalsäureanhydrid.

Teilchenförmige mineralische Füllstoffe können zum Beispiel durch amorphe Kieselsäure, Carbonate wie Magnesiumcarbonat, Calziumcarbonat (Kreide), gepulverter Quarz, Glimmer, unterschiedliche Silikate wie Tone, Muskovit, Biotit, Suzoit, Zinnmaletit, Talkum, Chlorit, Phlogophit, Feldspat, Calciumsilikate, wie Wollastonit oder Kaolin, besonders kalzinierter Kaolin zur Verfügung gestellt werden. Diese werden oft sehr feinteilig eingesetzt.

Die Teilchendurchmesser der Partikel können zum Beispiel dadurch bestimmt werden, dass elektronenmikroskopische Aufnahmen von Dünnschichten der Polymermischung aufgenommen und mindestens 25, bevorzugt mindestens 50 Füllstoffteilchen für die Auswertung herangezogen werden. Ebenso kann die Bestimmung der Teilchendurchmesser über Sedimentationsanalyse erfolgen (gemäß Transactions of ASAE, Seite 491, 1983). Der Gewichtsanteil der Füllstoffe, der weniger als 40 µm beträgt, kann auch mittels Siebanalyse gemessen werden. Das Aspektverhältnis ist das Verhältnis von Teilchendurchmesser zu Dicke (größter Ausdehnung zu kleinster Ausdehnung).

Auch faserförmige Füllstoffe wie Kohlenstofffasern, Kaliumtitanat-Whisker, Aramidfasern oder bevorzugt Glasfasern können eingesetzt, wobei mindestens 50 Gew.-% der faserförmigen Füllstoffe (Glasfasern) eine Länge von mehr als 50 mm aufweisen. Die verwendeten (Glas)fasern können vorzugsweise einen Durchmesser von bis zu 25 µm, besonders bevorzugt 5 bis 13 µm aufweisen. Vorzugsweise weisen mindestens 70 Gew.-% der Glasfasern eine Länge von mehr als 60 µm auf. Besonders bevorzugt beträgt im fertigen Formteil die mittlere Länge der Glasfasern 0,08 bis 0,5 mm. Die Länge der Glasfasern bezieht sich auf ein fertiges Formteil, das beispielsweise nach dem Spritzgießen erhalten wird. Dabei können die Glasfasern den Formmassen bereits in der entsprechend abgelängten Form oder auch in Form von Endlossträngen (Rovings) zugesetzt werden.

UV-Stabilisatoren sind beispielsweise verschiedene substituierte Resorcine, Salicylate, Benzotriazole und Benzophenone, die im Allgemeinen in Mengen bis zu 2 Gew.-%, z. B. 0,1 bis 2 Gew.-%, eingesetzt werden können.

Ferner können der thermoplastischen Zusammensetzungen gemäß der Erfindung Oxidationsverzögerer und Wärmestabilisatoren zugesetzt werden.

Halogenide von Metallen der Gruppe I des Periodensystems, zum Beispiel Natrium-, Lithium-Halogenide, gegebenenfalls in Verbindung mit Kupfer-(I)-Halogeniden, zum Beispiel Chloriden, Bromiden und Iodiden sind zu nennen. Die Halogenide, insbesondere des Kupfers, können auch noch elektronenreiche π-Liganden enthalten. Als Beispiel für derartige Kupferkomplexe seien Cu-Halogenid-Komplexe mit zum Beispiel Triphenylphosphin genannt. Weiterhin können Zinkfluorid und Zinkchlorid verwendet werden.

Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.-%, z. B. 0,1 bis 1 Gew.-%, bezogen auf das Gewicht der gesamten Mischung, einsetzbar.

Insbesondere vorteilhaft ist der Einsatz von UV- und Wärmestabilisatoren für Styrolcopolymere. Beispiele geeigneter Stabilisatoren sind zudem in DE-A 44 19 897 aufgeführt. Weiterhin können Umesterungsinhibitoren, wie Phosphate, Phosphite oder Phosphonite enthalten sein.

Gleit- und Entformungsmittel, die in der Regel in Mengen bis zu 1 Gew.-%, z. B. 0,1 bis 1 Gew.-%, der thermoplastischen Masse zugesetzt werden, sind Stearinsäure, Stearylalkohol, Stearinsäurealkylester und -amide, vorzugsweise Irganox®, sowie Ester des Pentaerythrits mit langkettigen Fettsäuren. Es können auch Salze des Calciums, Zinks oder Aluminiums der Stearinsäure sowie Dialkylketone, zum Beispiel Distearylketon, eingesetzt werden. Weiterhin können auch Ethylenoxid-Propylenoxid-Copolymere als Gleit- und Entformungsmittel verwendet werden.

Flammschutzmittel können sowohl halogenhaltige als auch vorzugsweise halogenfreie Verbindungen sein. Geeignete Halogenverbindungen, wobei bromierte Verbindungen den chlorierten vorzuziehen sind, bleiben bei der Herstellung und Verarbeitung der erfindungsgemäßen Formmasse stabil, so dass keine korrosiven Gase freigesetzt werden und die Wirksamkeit dadurch nicht beeinträchtigt wird. Bevorzugter Weise werden halogenfreie Verbindungen, wie zum Beispiel Phosphorverbindungen, insbesondere Phosphinoxide und Derivate von Säuren des Phosphors und Salze von Säuren und Säurederivaten des Phosphors, verwendet.

Besonders bevorzugt enthalten Phosphorverbindungen Ester-, Alkyl-, Cycloalkyl- und/oder Aryl-Gruppen. Ebenfalls geeignet sind oligomere Phosphorverbindungen mit einem Molekulargewicht kleiner 2000 g/mol wie diese zum Beispiel in EP-A 0 363 608 beschrieben werden.

Ebenfalls Pigmente und Farbstoffe können enthalten sein und sind allgemein in Mengen von 0 bis 4, bevorzugt 0 bis 3,4 und insbesondere 0,5 bis 3 Gew.-% enthalten. Die Pigmente zur Einfärbung von Thermoplasten sind allgemein bekannt, siehe zum Beispiel R. Gächter und H. Müller, Taschenbuch der Kunststoffadditive, Carl Hanser Verlag, 1983, S. 494 bis 510. Als erste bevorzugte Gruppe von Pigmenten sind Weißpigmente zu nennen wie Zinkoxid, Zinksulfid, Bleiweiß (2 PbCO₃.Pb(OH)₂), Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet. Schwarze Farbpigmente, die erfindungsgemäß eingesetzt werden können, sind Eisenoxidschwarz (Fe₃O₄), Spinellschwarz (Cu(Cr, Fe)₂O₄), Manganschwarz (Mischung aus Mangandioxid, Siliciumoxid und Eisenoxid), Kobaltschwarz und Antimonschwarz sowie besonders bevorzugt Ruß, der meist in Form von Furnace- oder Gasruß eingesetzt wird (siehe hierzu G. Benzing, Pigmente für Anstrichmittel, Expert-Verlag (1988), S. 78ff). Es können zur Einstellung bestimmter Farbtöne auch anorganische Buntpigmente wie Chromoxidgrün oder organische Buntpigmente wie Azopigmente und Phthalocyanine erfindungsgemäß eingesetzt werden. Derartige Pigmente sind allgemein im Handel erhältlich. Weiterhin kann es von Vorteil sein, die genannten Pigmente bzw. Farbstoffe in Mischung einzusetzen, zum Beispiel Ruß mit Kupferphthalocyaninen, da allgemein die Farbdispergierung im Thermoplasten erleichtert wird.

Unter Oligomeren werden im Zusammenhang mit der vorliegenden Erfindung solche Verbindungen verstanden, die eine Molmasse (M_{W}) von 100 bis 700 g pro Mol aufweisen. Die Bestimmung der Molmasse kann dabei nach gängigen Methoden (wie der Größenausschluss-Chromatographie, SEC) erfolgen. Die Oligomere sind häufig im Wesentlichen gebildet aus den MonomerenStyrol und /oder Acrylnitril. Oftmals stammen diese Oligomere aus der Komponente A der Zusammensetzung.

Die Herstellung der erfindungsgemäßen thermoplastischen Formmassen erfolgt nach bekannten Verfahren durch Mischen der Komponenten. Es kann vorteilhaft sein, einzelne Komponenten vorzumischen. Auch das Mischen der Komponenten in Lösung unter Entfernen der Lösungsmittel ist möglich. Geeignete organische Lösungsmittel sind beispielsweise Chlorbenzol, Gemische von Chlorbenzol und Methylenchlorid oder Gemische von Chlorbenzol und aromatischen Kohlenwasserstoffen wie Toluol.

Vorzugsweise wird ohne chlorhaltige Lösungsmittel gearbeitet. Das Eindampfen der Lösungsmittelgemische kann beispielsweise in Eindampfextrudern erfolgen.

Das Mischen der beispielsweise trockenen Komponenten A und B und gegebenenfalls C und D kann nach allen bekannten Methoden erfolgen. Vorzugsweise geschieht das Mischen bei Temperaturen von 200 bis 290°C, insbesondere 230° bis 260°C, durch gemeinsames Extrudieren, Kneten oder Verwalzen der Komponenten, wobei die Komponenten gegebenenfalls zuvor aus der bei der Polymerisation erhaltenen Lösung oder aus der wässrigen Dispersion isoliert worden sind.

Die erfindungsgemäßen thermoplastischen Formmassen können nach den bekannten Verfahren der Thermoplasten-Verarbeitung verarbeitet werden, beispielsweise durch Extrudieren, Spritzgießen, Kalandrieren, Hohlkörperblasen oder Sintern.

Die erfindungsgemäßen Formmassen können zur Herstellung von Folien, Fasern und Formkörpern eingesetzt werden. Zudem können sie bevorzugt zur Herstellung von Karosserieteilen im Automobilsektor, insbesondere zur Herstellung von mechanisch anspruchsvollen Automobilteilen sowie von den eingangs genannten Bauteilen eingesetzt werden.

Die Erfindung betrifft auch entsprechende Formkörper, Fasern oder Folien sowie Karosserieteile von Kraftfahrzeugen und die eingangs beschriebenen Produkte.

Die erfindungsgemäßen Formmassen können nach an sich bekannten Verfahren, beispielsweise Extrusion, hergestellt werden. Zur Herstellung können die Ausgangskomponenten in üblichen Mischvorrichtungen wie Schneckenextrudern vorzugsweise Zweischneckenextrudern, Brabender-Mischer oder Banburry-Mischer sowie Knetern mischt und anschließend extrudiert werden. Das Extrudat wird nach der Extrusion abgekühlt und zerkleinert. Die Reihenfolge der Mischung der Komponenten kann variiert werden, so können zwei oder ggf. drei Komponenten vorgemischt werden, es können aber auch alle Komponenten gemeinsam gemischt werden.

Zur Herstellung der Formmassen werden die vorbeschriebenen teilchenförmigen Pfropfpolymerisate in eine Hartkomponente, z. B. das SAN-Copolymer, eingearbeitet. Die Einarbeitung kann zum Beispiel dadurch erfolgen, dass das bzw. die teilchenförmigen Pfropfpolymere durch Zugabe eines Elektrolyten aus der Emulsion isoliert werden. Die Isolation (der Weichkomponente), z. B. kann unter anderem durch Fällen, Abzentrifugieren, Einengen oder weiterer gängiger Verfahren erfolgen.

Anschließend kann das Zwischenprodukt gegebenenfalls getrocknet werden, um durch gemeinsames Extrudieren, Kneten oder Walzen mit der Hartkomponente A vermischt zu werden.

Um eine möglichst homogene Durchmischung der Komponenten zu erhalten, ist eine intensive Durchmischung vorteilhaft. Dazu sind im Allgemeinen mittlere Mischzeiten von 0,2 bis 30 Minuten, bevorzugt von 5 bis 30 Minuten, bei Temperaturen von 200 bis 290°C, bevorzugt von 230 bis 260°C, erforderlich. Nach der Extrusion wird das Extrudat in der Regel abgekühlt und zerkleinert.

Die erfindungsgemäßen Formmassen zeichnen sich überraschenderweise durch ausgewogene Produkteigenschaften bezüglich Schmelzflussindex (MVR), Haze (Trübung), Kratzfestigkeit und Kerbschlagzähigkeit (aK) aus, wenn eine definierte Menge an Oligomeren in der Zusammensetzung enthalten ist.

Die Erfindung wird durch die nachfolgenden Beispiele und Patentansprüche erläutert:

### Polymereigenschaften und Messmethoden

Der SAN-Oligomeranteil wurde durch SEC-Messung bestimmt.

Die Kerbschlagzähigkeit (ak) der thermoplastischen Formmassen bei 23°C wurde an ISO-Stäben nach DIN 53 453 (ISO 179 1eA) bestimmt.

Zur Bestimmung der Kratzfestigkeit wurden ein Crockmeter-Test sowie ein Nanoindentations-Test durchgeführt. Die Kratzfestigkeit wurde mittels Nanoindentation Test nach PV 3952 mit Kratztiefen im Bereich (mm) durchgeführt. Dazu wurden an der Oberfläche des Bauteils nach einer Kratzbeanspruchung eine farbmetrische Messung und eine optische Beurteilung vorgenommen.

Die Reibechtheit wurde mittels Crockmeter Test nach DIN EN ISO 105-X12 überprüft. Dazu wurden an den Oberflächen der zu untersuchenden Materialien 5 bzw. 10 Doppelhüben durchgeführt und auch die Glanzeinheit untersucht.

Die Fließfähigkeit (MVR) wurde nach der Norm DIN EN ISO 1133 bei 240°C und 5 kg Prüfungslast sowie bei 220°C und 10 kg Belastung bestimmt.

Der Haze (Prüfungen von Optischen- und Oberflächenparametern von Kunststoff) der ABS-Proben wurde von 10 Personen unabhängig voneinander bewertet.

Die Auswertung erfolgt nach Punkten von 1 bis 5 (wobei 5 ist höchste Punktzahl ist).

### Beispiel 1 Herstellung und Prüfung der erfindungsgemäßen Formmassen

### a) Herstellung der Komponente A1 der erfindungsgemäßen Formmasse

Durch Substanzpolymerisation (ohne Lösungsmittel) wurde ein Styrol-Acrylnitril-Copolymer mit 76 Gew.-% Styrol und 24 Gew.-% Acrylnitril und einer Viskositätszahl von 80 ml/g (bestimmt nach DIN 53726 oder DIN EN ISO 1628-2 in 0,5 Gew.-%iger DMF-Lösung bei 25°C) hergestellt. Das Molekulargewicht (Mn) beträgt etwa 100.000 g/mol (GPC in THF mit PS-Eichung: Stationäre Phase: 5-Styrol-divinylbenzol-Gel-Säulen (PLgel Mixed-B, Polymer Laboratories); THF 1,2 ml/min).

### b) Herstellung der Komponente A2 der erfindungsgemäßen Formmasse

Durch Substanzpolymerisation wurde ein *α*-Methylstyrol-Acrylnitril-Copolymer mit 75 Gew.-% *α*-Methylstyrol und 25 Gew.-% Acrylnitril und einer Viskositätszahl von 80 ml/g (bestimmt nach DIN 53726 oder DIN EN ISO 1628-2 in 0,5 Gew.-%iger DMF-Lösung bei 25°C) hergestellt.

Das Molekulargewicht (Mn) beträgt etwa 120.000 g/mol (GPC in THF mit PS-Eichung: Stationäre Phase: 5-Styrol-divinylbenzol-Gel-Säulen (PLgel Mixed-B, Polymer Laboratories); THF 1,2 ml/min).

### c) Herstellung der Komponente B1 der Formmasse

Es wurde in Emulsionspolymerisation unter Einsatz von Kaliumperoxodisulfat als Initiator ein Pfropfkautschuk mit 60 Gew.-% Polybutadien als Pfropfgrundlage und 40 Gew.-% einer Pfropfhülle aus 80 Gew.-% Styrol und 20 Gew.-% Acrylnitril hergestellt. Die mittlere Teilchengröße betrug ca. 400 nm (gemessen mittels Ultra-Zentrifuge).

### d) Bereitstellung der Komponente D der Formmasse

Als Komponente D wurde Irganox® PS802 (Di-stearyl-dithiopropionat), Hersteller Ciba (Schweiz) eingesetzt.

### e) Herstellung der erfindungsgemäßen Formmassen

Die in den Tabellen 1 und 2 für die erfindungsgemäßen Zusammensetzungen (1 und 4) und die Vergleichszusammensetzungen (V2 und V3) beschriebenen Komponenten wurden in einem Extruder (ZSK 30 Doppelschneckenextruder der Fa. Werner & Pfleiderer) bei einer Temperatur von 240°C innig vermischt. Die Schmelze wurde anschließend durch ein Wasserbad geleitet und das Produkt granuliert.

Die Ergebnisse der Prüfung der erhaltenen Formmassen sind in den nachfolgenden Tabellen 1 und 2 aufgeführt, wobei OA den Oligomerenanteil (in Gew.-%) in der gesamten Zusammensetzung bedeutet.

**Tabelle 1**

| Formmasse | 1 | V2 |
|---|---|---|
| A1 | 65 | 66 |
| B1 | 33 | 33 |
| D | 2 | 1 |
| OA | 2,2 | 3,5 |
| MVR [220/10] | 16,9 | 21,9 |
| Charpy (ak,23 °C) [kJ/m²] | 7,3 | 5,9 |
| Haze | 4 | 2 |

Die Formmasse (1) mit 2,2 Gew.-% Oligomeren führt zu deutlich besseren Eigenschaften als die Vergleichsformmasse (V2) mit 3,5 Gew.-%.

**Tabelle 2**

| Formmasse | V3 | 4 |
|---|---|---|
| A2 | 99 | 99 |
| | | |
| D | 1 | 1 |
| OA | <0,01 | 0,6 |
| MVR [220/10] | 8,3 | 9,1 |
| Charpy (ak,23 °C) [kJ/m²] | 1,3 | 1,2 |

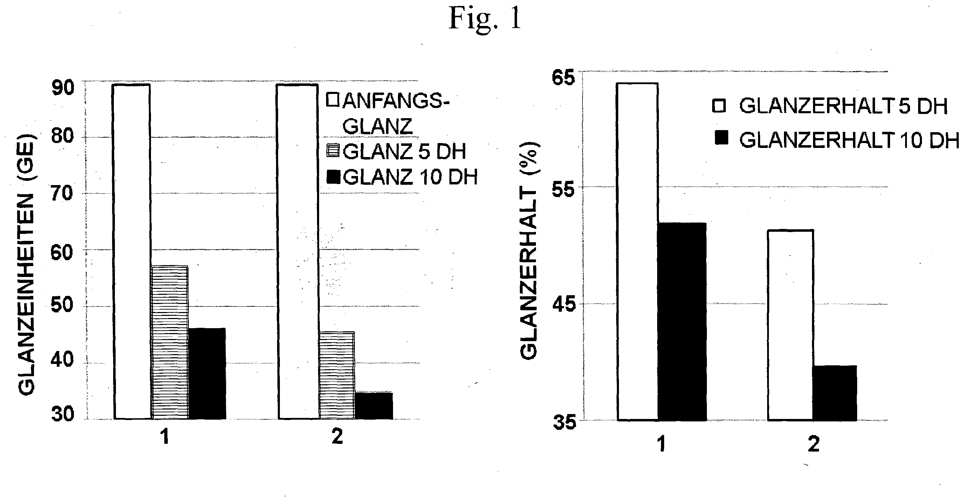

Darüber hinaus wird in Figur 1 (Fig. 1) das Ergebnis eines Crockmeter Tests aufgeführt, wobei links die Glanzeinheiten (GE) vor (0 Doppelhübe, DH) und nach dem Kratzen (5 bzw. 10 Doppelhübe) und rechts der Glanzerhalt (%) nach dem Kratzen (5 bzw. 10 Doppelhübe) dargestellt werden.

Aus Figur 1 geht hervor, dass der Glanzerhalt mit einer Oligomermenge > 3 Gew.-% (2 entspricht V2) im Vergleich zu der Formmasse (1) mit geringerem Oligomeranteil deutlich abnimmt.

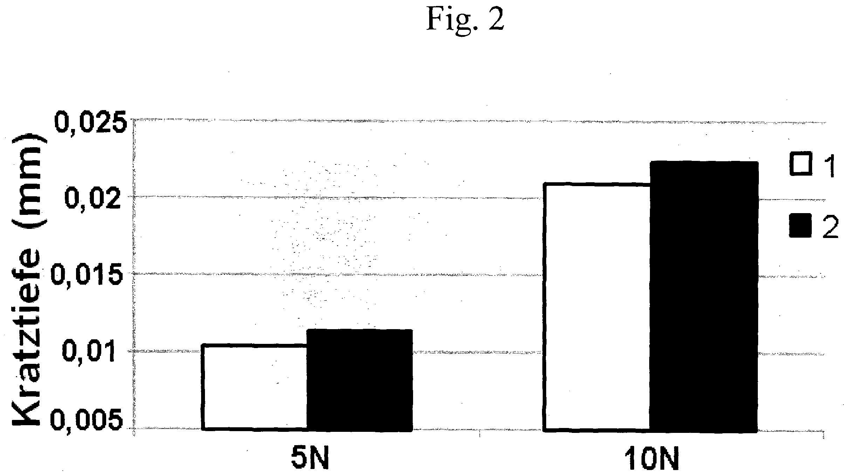

Darüber hinaus wird in Figur 2 (Fig. 2) das Ergebnis eines Nano-Indentations-Tests aufgeführt, wobei die Kratztiefe (in mm) bei einer Kraft-Einwirkung von 5 N und 10 N dargestellt wird.

Auch aus den in Figur 2 dargestellten Diagrammen ist gut ersichtlich, dass die Formmassen mit einer Oligomermenge > 3 Gew.-% (2, entspricht V2) nach 5N bzw. 10N tiefere Einkerbungen aufweisen als die erfindungsgemäße Zusammensetzung (1).

## Patentansprüche

1. Thermoplastische Zusammensetzung, enthaltend die Komponenten A und B sowie gegebenenfalls die weiteren Komponenten C und D, deren Summe insgesamt 100 Gew.-% ergibt, wobei die Formmasse besteht aus:
a) 60 bis 75 Gew.-% eines oder mehrerer Styrolcopolymere A,
b) 25 bis 40 Gew.-% eines oder mehrerer Pfropfcopolymere B,
c) 0 bis 15 Gew.-% eines von Komponente B verschiedenen Kautschuks C,
d) 0 bis 5 Gew.-% eines oder mehrerer Additive D,
wobei die Zusammensetzung 0,2 bis 3,0 Gew.-%, insbesondere 0,6 bis 3,0 Gew.-%, bezogen auf das Gesamtgewicht der Komponenten A bis D an Oligomeren enthält, wobei die Oligomere eine Molmasse im Bereich von 100 bis 700 g/mol besitzen und im Wesentlichen aus Styrol und/oder Acrylnitril gebildet werden.

2. Zusammensetzung gemäß Anspruch 1, **dadurch gekennzeichnet, dass** Komponente B ein Polybutadienkautschuk ist, hergestellt unter Einsatz von 1 bis 5 Gew.-%, bezogen auf Komponente B, eines agglomerierenden Zusatzstoffes.

3. Zusammensetzung gemäß einem der Ansprüchen 1 bis 2, **dadurch gekennzeichnet, dass** sie von 60 bis 70 Gew.-% eines oder mehrerer Styrolcopolymere A enthält, wobei dieses Styrol-Copolymer A aus zwei oder mehreren Monomeren aus den Gruppen Styrol, α-Methylstyrol einerseits und Acrylnitril und/oder Methylmethacrylat andererseits aufgebaut ist.

4. Zusammensetzung gemäß einem der Ansprüche 1 bis 3, **dadurch gekennzeichnet, dass** sie 29 bis 37 Gew.-%, eines oder mehrerer Pfropfcopolymere B enthält, wobei dieses Pfropfcopolymer B aus einer Pfropfgrundlage und mindestens einer Pfropfauflage aufgebaut ist, wobei die Pfropfauflage aus zwei oder mehreren Monomeren aus der Gruppe Butadien, Styrol, Acrylnitril, α-Methylstyrol, MMA, Butylacrylat, Ethylacrylat und Methylacrylamid aufgebaut ist.

5. Zusammensetzung gemäß einem der Ansprüche 1 bis 4, **dadurch gekennzeichnet, dass** sie zusätzlich 1 bis 15 Gew.-% eines von Komponente B verschiedenen Kautschuk C enthält, wobei dieser weitere Kautschuk C zwei oder mehrere Monomere aus der Gruppe Ethen, Propen, Buten und/oder Octen als Bausteine enthält.

6. Zusammensetzung gemäß einem der Ansprüche 1 bis 5, **dadurch gekennzeichnet, dass** das Pfropfcopolymer B aufgebaut ist aus:
(B1): 40 bis 85 Gew.-%, bezogen auf den Feststoffgehalt des Pfropfcopolymers B, einer Pfropfgrundlage B1, erhältlich durch
(a) Polymerisation von:
| | |
|---|---|
| (B11): | 0 bis 10 Gew.-%, bezogen auf die Pfropfgrundlage B1, Styrol, und |
| (B12): | 90 bis 100 Gew.-%, bezogen auf die Pfropfgrundlage B1, Butadien; |
und (b) Agglomeration der erhaltenen Pfropfgrundlage B1 durch Zugabe von:
(E): 0,01 bis 5 Gew.-Teilen, bezogen auf 100 Gew.-Teile der Pfropfgrundlage B1, jeweils bezogen auf den Feststoffgehalt, eines agglomerierend wirkenden Copolymers (E) aus:
(E1): 80 bis 99,9 Gew.-% ein oder mehreren C₁- bis C₁₂-Alkylacrylaten oder C₁-bis C₁₂-Alkylmethacrylaten und
(E2): 0,1 bis 20 Gew.-% ein oder mehreren Comonomeren, ausgewählt aus der Gruppe bestehend aus Acrylamid, Methylacrylamid, Ethylacrylamid und n-Butylacrylamid; und
(B2): 15 bis 60 Gew.-% bezogen auf den Feststoffgehalt des Pfropfcopolymers B, einer Pfropfhülle (B2), erhältlich durch Umsetzung der agglomerierten Pfropfgrundlage B1 mit einer Mischung von:
| | |
|---|---|
| (B21): | 70 bis 90 Gew.-%, bezogen auf die Pfropfhülle B2, Styrol, und |
| (B22): | 10 bis 30 Gew.-%, bezogen auf die Pfropfhülle B2, Acrylnitril, |
wobei
(i) das agglomerierend wirkende Copolymer (E) eine Polydispersität U von kleiner 0,27 und einen d₅₀-Wert von 100 bis 150 nm aufweist, und
(ii) die agglomerierte Pfropfgrundlage B1 eine bimodale Teilchengrößenverteilung von einer Fraktion x) nicht agglomerierter Teilchen mit einem d₅₀-Wert im Bereich von 80 bis 120 nm und einer Fraktion y) agglomerierter Teilchen mit einem d₅₀-Wert im Bereich von 350 bis 550 nm und einer Polydispersität U von kleiner 0,27 aufweist.

7. Zusammensetzung gemäß einem der Ansprüche 1 bis 6, **dadurch gekennzeichnet, dass** die Komponente A aus 60 bis 85 Gew.-% Styrol und 15 bis 40 Gew.-% Acrylnitril aufgebaut ist.

8. Zusammensetzung gemäß Anspruch 1, enthaltend die Komponenten A und B und D, deren Summe insgesamt 100 Gew.-% ergibt, wobei die Formmasse besteht aus (etwa) 65 bis 70 Gew.-% eines Styrol-Acrylnitril-Copolymeren A, (etwa) 30 bis 35 Gew.-% eines ABS-Pfropfcopolymere B und 0,1 bis 5 Gew.-% eines Additives D, wobei die Zusammensetzung 1,1 bis 2,8 Gew.-%, bezogen auf das Gesamtgewicht der Komponenten A bis D an Oligomeren aus Styrol und/oder Acrylnitril mit einer Molmasse von 100 bis 700 g/mol enthält.

9. Verfahren zur Herstellung einer thermoplastischen Zusammensetzung nach einem der Ansprüche 1 bis 8 durch Mischen der Komponenten A und B und gegebenenfalls der weiteren Komponenten C und/oder D.

10. Verfahren zur Herstellung einer thermoplastischen Zusammensetzung nach einem der Ansprüche 1 bis 8 durch folgende Verfahrensschritte:
(i) Polymerisieren von Styrol, α-Methylstyrol und/oder Acrylnitril, wobei die dabei erhaltene Zusammensetzung 0,6 bis 3,0 Gew.-%, bezogen auf das Gesamtgewicht der Komponenten A bis D, an Oligomeren enthält,
(ii) Polymerisieren der Monomeren Styrol und Butadien in wässriger Emulsion zu einer teilchenförmigen Pfropfgrundlage B1,
(iii) Agglomeration der in einer Emulsion vorliegenden teilchenförmigen Pfropfgrundlage B1 mittels eines agglomerierend wirkenden Copolymers (E), wobei das Copolymer (E) eine Polydispersität U von kleiner 0,27 und einen d₅₀-Wert von 100 bis 150 nm aufweist, zu einer agglomerierten teilchenförmigen Pfropfgrundlage B1, und nachfolgend
(iv) Polymerisieren der Monomeren Styrol und Acrylnitril der Pfropfhülle in wässriger Emulsion in Gegenwart der agglomerierten teilchenförmigen Pfropfgrundlage B1,
(v) Mischen der Komponenten A und B und gegebenenfalls der weiteren Komponenten C und/oder D.

11. Verfahren zur Herstellung einer thermoplastischen Zusammensetzung nach Anspruch 10, wobei die Vermischung der Komponenten im Extruder erfolgt und der Vorgang des Extrudierens in einem Zeitraum von 0,2 bis 30 Minuten und in einem Temperaturbereich von 230 bis 260 °C erfolgt.

12. Verwendung einer thermoplastischen Zusammensetzung nach einem der Ansprüche 1 bis 8 zur Herstellung von Fasern, Folien und Formkörpern.

13. Formkörper, Fasern und Folien aus einer thermoplastischen Zusammensetzung gemäß einem der Ansprüche 1 bis 8.

## Claims

1. A thermoplastic composition comprising the components A and B and optionally the further components C and D which altogether sum to 100 wt%, wherein the molding material is composed of:
a) 60 to 75 wt% of one or more styrene copolymers A,
b) 25 to 40 wt% of one or more graft copolymers B,
c) 0 to 15 wt% of a rubber C distinct from component B,
d) 0 to 5 wt% of one or more additives D,
wherein the composition comprises 0.2 to 3.0 wt%, in particular 0.6 to 3.0 wt%, based on the total weight of the components A to D, of oligomers, wherein the oligomers have a molar mass in the range from 100 to 700 g/mol and are formed substantially from styrene and/or acrylonitrile.

2. The composition as claimed in claim 1, **characterized in that** component B is a polybutadiene rubber produced using 1 to 5 wt%, based on component B, of an agglomerating added substance.

3. The composition as claimed in either of claims 1 and 2, **characterized in that** said composition comprises 60 to 70 wt% of one or more styrene copolymers A, wherein this styrene copolymer A is constructed from two or more monomers from the groups styrene, α-methylstyrene on the one hand and acrylonitrile and/or methyl methacrylate on the other hand.

4. The composition as claimed in any of claims 1 to 3, **characterized in that** said composition comprises 29 to 37 wt% of one or more graft copolymers B, wherein this graft copolymer B is constructed from a graft substrate and at least one graft superstrate, wherein the graft superstrate is constructed from two or more monomers from the group butadiene, styrene, acrylonitrile, α-methylstyrene, MMA, butyl acrylate, ethyl acrylate and methylacrylamide.

5. The composition as claimed in any of claims 1 to 4, **characterized in that** said composition additionally comprises 1 to 15 wt% of a rubber C distinct from component B, wherein said further rubber C comprises two or more monomers from the group ethene, propene, butene and/or octene as building blocks.

6. The composition as claimed in any of claims 1 to 5, **characterized in that** the graft copolymer B is constructed from:
(B1): 40 to 85 wt%, based on the solids content of the graft copolymer B, of a graft substrate B1 obtainable by:
(a) polymerization of:
(B11): 0 to 10 wt%, based on the graft substrate B1, of styrene, and
(B12): 90 to 100 wt%, based on the graft substrate B1, of butadiene,
and (b) agglomeration of the obtained graft substrate B1 by addition of:
(E): 0.01 to 5 parts by wt, based on 100 parts by wt of the graft substrate B1, in each case based on the solids content, of an agglomerating copolymer (E) composed of:
(E1): 80 to 99.9 wt% of one or more C₁- to C₁₂-alkyl acrylates or C₁- to C₁₂-alkyl methacrylates and
(E2): 0.1 to 20 wt% of one or more comonomers selected from the group consisting of acrylamide, methylacrylamide, ethylacrylamide and n-butylacrylamide; and
(B2): 15 to 60 wt%, based on the solids content of the graft copolymer B, of a graft shell (B2), obtainable by reaction of the agglomerated graft substrate B1 with a mixture of:
(B21): 70 to 90 wt%, based on the graft shell B2, of styrene, and
(B22): 10 to 30 wt%, based on the graft shell B2, of acrylonitrile,
wherein
(i) the agglomerating copolymer (E) has a polydispersity U of less than 0.27 and a d₅₀ value of 100 to 150 nm and
(ii) the agglomerated graft substrate B1 has a bimodal particle size distribution of a fraction x) of nonagglomerated particles having a d₅₀ value in the range from 80 to 120 nm and a fraction y) of agglomerated particles having a d₅₀ value in the range from 350 to 550 nm and a polydispersity U of less than 0.27.

7. The composition as claimed in any of claims 1 to 6, **characterized in that** the component A is constructed from 60 to 85 wt% of styrene and 15 to 40 wt% of acrylonitrile.

8. The composition as claimed in claim 1, comprising the components A and B and D which altogether sum to 100 wt%, wherein the molding material is composed of (about) 65 to 70 wt% of a styrene-acrylonitrile copolymer A, (about) 30 to 35 wt% of an ABS graft copolymer B and 0.1 to 5 wt% of an additive D, wherein the composition comprises 1.1 to 2.8 wt%, based on the total weight of the components A to D, of an oligomer composed of styrene and/or acrylonitrile having a molar mass of 100 to 700 g/mol.

9. A method of producing a thermoplastic composition as claimed in any of claims 1 to 8 by mixing the components A and B and optionally the further components C and/or D.

10. A method of producing a thermoplastic composition as claimed in any of claims 1 to 8 by the following steps:
(i) polymerizing styrene, α-methylstyrene and/or acrylonitrile, wherein the thus obtained composition comprises 0.6 to 3.0 wt%, based on the total weight of the components A to D, of oligomers,
(ii) polymerizing the monomers styrene and butadiene in aqueous emulsion to afford a particulate graft substrate B1,
(iii) agglomeration of the particulate graft substrate B1 which is present in an emulsion using an agglomerating copolymer (E), wherein the copolymer (E) has a polydispersity U of less than 0.27 and a d₅₀ value of 100 to 150 nm to afford an agglomerated particulate graft substrate B1 and subsequently
(iv) polymerizing the monomers styrene and acrylonitrile of the graft shell in aqueous emulsion in the presence of the agglomerated particulate graft substrate B1,
(v) mixing the components A and B and optionally the further components C and/or D.

11. The method of producing a thermoplastic composition as claimed in claim 10, wherein the mixing of the components is effected in an extruder and the extruding procedure is effected over a time period of 0.2 to 30 minutes and in a temperature range from 230°C to 260°C.

12. The use of a thermoplastic composition as claimed in any of claims 1 to 8 for producing fibers, films and molded articles.

13. Molded articles, fibers and films made of a thermoplastic composition according to any of claims 1 to 8.

## Revendications

1. Composition thermoplastique comprenant des composants A et B et éventuellement d'autres composants C et D, en des proportions formant au total 100% en poids, la composition de moulage étant constituée de:
a) 60 à 75% en poids d'un ou plusieurs copolymères de styrène A,
b) de 25 à 40% en poids d'un ou plusieurs copolymères greffés B,
c) de 0 à 15% en poids d'un caoutchouc C différent du composant B,
d) de 0 à 5% en poids d'un ou plusieurs additifs D,
cette composition contenant 0,2 à 3,0% en poids, notamment de 0,6 à 3,0% en poids, exprimés par rapport au poids total des composants A à D, d'oligomères, et les oligomères présentant une masse moléculaire de l'ordre de 100 à 700g/mol et étant pratiquement formée de styrène et/ou d'acrylonitrile.

2. Composition selon la revendication 1, **caractérisée en ce que** le composant B est un caoutchouc de polybutadiène, préparé en utilisant de 1 à 5% en poids, exprimés par rapport au composant B, d'un additif agglomérée.

3. Composition selon l'une des revendications 1 ou 2, **caractérisée en ce qu'**elle contient de 60 à 70% en poids d'un ou plusieurs copolymères de styrène A, ce copolymère de styrène A étant formé de deux ou davantage de monomères choisis dans le groupe formé par le styrène, l'α-méthylstyrène d'une part et d'autre part l'acrylonitrile et/ou le méthacrylate de méthyle.

4. Composition selon l'une quelconque des revendications 1 à 3, **caractérisée en ce qu'**elle contient de 29 à 37% en poids d'un ou plusieurs copolymères greffés B, ce copolymère greffé B étant constitué d'une base greffée et d'au moins un revêtement greffé, ce revêtement greffé étant formé de deux ou plusieurs monomères choisis dans le groupe formé par le butadiène, le styrène, l'acrylonitrile, l'α-méthylstyrène, le MMA, l'acrylate de butyle, l'acrylate d'éthyle et le méthylacrylamide.

5. Composition selon l'une quelconque des revendications 1 à 4, **caractérisée en ce qu'**elle contient en outre de 1 à 15% en poids d'un des différents caoutchoucs C du composant B, ce caoutchouc C supplémentaire contenant deux ou plus de deux monomères choisis dans le groupe formé par l'éthène, le propène, le butène et/ou l'octène comme blocs de construction.

6. Composition selon l'une quelconque des revendications 1 à 5, **caractérisée en ce que** le copolymère greffé B1 est constitué de:
(B1): de 40 à 85% en poids, exprimés par rapport à la teneur en solides du copolymère greffé B, d'une base de greffage B1 obtenue par :
(a) polymérisation de
(B11): 0 à 10% en poids de styrène, exprimés par rapport à la base de greffage B1, et
(B12): 90 à 100% en poids, exprimés par rapport à la base de greffage B1, de butadiène; et
(b) agglomération de la base de greffage B1 résultante par addition de:
(E): de 0,01 à 5 parties en poids, exprimées par rapport à 100 parties en poids de la base de greffage B1, toutes exprimées par rapport à la teneur en solides d'un copolymère (E) aggloméré formé de:
(E1): 80 à 99,9% en poids d'un ou plusieurs alkyl-acrylates en C₁ à C₁₂ ou alkylméthylacrylates en C₁-C₁₂, et
(E2): 0,1 à 20% en poids d'un ou plusieurs comonomères choisis dans le groupe constitué par les acrylamides, méthylacrylamides, éthylacrylamides et n-butylacrylamide; et
(B2): 15 à 60% en poids, exprimés par rapport à la teneur en matière solide du copolymère greffé B, d'une enveloppe greffée, susceptible d'être obtenue par traitement de la base greffée B1 agglomérée avec un mélange de:
(B21): 70 à 90% en poids de styrène, exprimés par rapport à l'enveloppe de greffe B2,, et
(B22): 10 à 30% en poids d'acrylonitrile, exprimés par rapport à l'enveloppe de greffe B2,
dans laquelle
(i) le copolymère agglomérée (E) présentant une polydispersité U inférieure à 0,27 et une valeur d₅₀ de 100 à 150 nm, et
(ii) la base de greffage agglomérée B1 présentant une distribution granulométrique bimodale pour une fraction x) de particules non agglomérées ayant une valeur d₅₀ comprise entre 80 et 120 nm et une fraction y) de particules agglomérées ayant une valeur d₅₀ de 350 à 150 nm et une polydispersité U inférieure à 0,27.

7. Composition selon l'une des revendications 1 à 6, **caractérisée en ce que** l'on prépare le composant A à partir de 60 à 85% en poids de styrène et de 15 à 40% en poids d'acrylonitrile.

8. Composition selon la revendication 1, comprenant les composants A et B et D, en des proportions formant au total 100% en poids, la composition à mouler étant constituée de (quelque) 65 à 70% en poids d'un copolymère styrène-acrylonitrile A, de (quelque) 30 à 35% en poids d'un copolymère greffé ABS B et de 0,1 à 5% en poids d'un additif D, ladite composition contenant 1,1 à 2,8% en poids, exprimés par rapport au poids total des composants A à D. d'oligomères de styrène et/ou d'acrylonitrile ayant un poids moléculaire de 100 à 700 g/mol.

9. Procédé de préparation d'une composition thermoplastique selon l'une des revendications 1 à 8 par mélange des composants A et B et éventuellement d'autres composants C et/ou D.

10. Procédé de préparation d'une composition thermoplastique selon l'une des revendications 1 à 8 par les étapes suivantes:
(i) la polymérisation du styrène, de l'a-méthylstyrène et/ou de l'acrylonitrile, de sorte que la composition résultante contienne de 0,6 à 3,0% en poids, d'oligomères exprimés par rapport au poids total des composants A à D, ,
(ii) la polymérisation en émulsion aqueuse des monomères styrène et butadiène pour former une base de greffage particulaire B1,
(iii) l'agglomération de la base de greffage particulaire B1 présente dans l'émulsion au moyen d'un copolymère aggloméré (E), le copolymère (E) ayant une polydispersité U inférieure à 0,27 et une valeur d₅₀ de 100 à 150 nm, à une base de greffe particulaire agglomérée B1, et ensuite
(iv) la polymérisation des monomères styrène et acrylonitrile de l'enveloppe de greffage en émulsion aqueuse en présence de la base de greffage particulaire agglomérée B1,
(v) le mélange des composants A et B et éventuellement des autres composants C et/ou D.

11. Procédé de préparation d'une composition thermoplastique selon la revendication 10, dans lequel le mélange des composants est effectué dans une extrudeuse et le traitement d'extrusion se déroule en une période de 0,2 à 30 minutes et dans une plage de température comprise entre 230 et 260°C.

12. Utilisation d'une composition thermoplastique selon l'une quelconque des revendications 1 à 8, pour la fabrication de fibres, de films et de moulages.

13. Corps façonnés, fibres et films d'une composition thermoplastique selon l'une des revendications 1 à 8.
